# EUROPÄISCHE PATENTANMELDUNG

(11) **EP 1 845 469 A1**
(43) Veröffentlichungstag der Anmeldung: **17.10.2007**
(21) Anmeldenummer: 06007705.4
(22) Anmeldetag: 12.04.2006
(51) Int. Cl.: G06F 21/00

(54) **Authentifizierungsverfahren und Authentifizierungssystem**

(71) Anmelder: SIEMENS AKTIENGESELLSCHAFT, 80333 München (DE)
(72) Erfinder: Dombrowski, Sascha, 90489 Nürnberg (DE)

(57) **Zusammenfassung**

Angegeben wird ein Verfahren zu einer Authentifizierung eines Clients, z. B. eines ein Terminal (10) bedienenden Nutzers (11), mittels eines Authentifizierungssystems (12) mit Zugriff auf zumindest ein Datum (16, 76) und zumindest eine Interpretationsvorschrift (18), wobei das Authentifizierungssystem (12) vom Nutzer zumindest einen Identifikationscode - empfangener Identifikationscode (22) - empfängt. Bei einem zugelassenen Identifikationscode (28) ergibt sich mindestens eine damit assoziierte Interpretationsvorschrift (18). Dem Nutzer (11) wird zumindest ein Datum (16, 76) zur Interpretation übermittelt und aus dem jeweiligen Datum (16, 76) ergibt sich anhand der Interpretationsvorschrift (18) eine erwartete Interpretation (30) des Datums (16, 76). Das Authentifizierungssystem (12) empfängt eine Interpretation des Datums (16, 76) durch den Nutzer (11) - empfangene Interpretation (34) - und vergleicht diese mit der erwarteten Interpretation (30); wenn empfangene und erwartete Interpretation (34, 30) übereinstimmen, ist der Nutzer (11) authentifiziert.

## Beschreibung

Die Erfindung betrifft ein Verfahren zu einer Authentifizierung eines Nutzers sowie ein nach dem Verfahren arbeitendes Authentifizierungssystem.

Verfahren zur Authentifizierung eines Nutzers sind allgemein bekannt, z. B. Verfahren auf Basis der Verwendung von mehrfach gültigen vierstelligen PIN Codes (Personal Identification Number) an Geldautomaten oder auf Basis der Eingabe von alphanumerischen Passwörtern bei elektronischen Datenverarbeitungssystemen (EDV-Systemen). Zudem sind auch Verfahren zur Authentifizierung bekannt, bei welchen nur einmalig gültige Codes oder Passwörter verwendet werden, beispielsweise aus dem Bereich des so genannten online-bankings.

Nachteilig bei diesen bekannten Verfahren ist jedoch, dass mehrfach verwendbare Codes (z. B. PINs) oder Passwörter auch Dritten zugänglich werden können und somit nur eine eingeschränkte Sicherheit bieten. Verfahren, welche mit einmal zu verwendenden Codes oder Passwörtern durchgeführt werden, erfordern, dass dem Nutzer diese Codes oder Passwörter zur Verfügung gestellt werden, beispielsweise in Form einer Liste, was wiederum Dritten einen Zugriff darauf ermöglichen kann.

Der Erfindung liegt daher die Aufgabe zugrunde, ein Verfahren mit erhöhter Sicherheit zur Authentifizierung eines Nutzers und gleichzeitig eine Alternative zu den bisher bekannten Verfahren anzugeben. Darüber hinaus soll eine besonders geeignete Vorrichtung zur Authentifizierung des Nutzers gemäß diesem Verfahren angegeben werden.

Bezüglich des Verfahrens wird diese Aufgabe erfindungsgemäß mit den Merkmalen des Anspruchs 1 gelöst. Dazu ist vorgesehen, dass ein Authentifizierungssystem Zugriff auf zumindest ein Datum und zumindest eine Interpretationsvorschrift hat und vom Nutzer zumindest einen Identifikationscode empfängt (empfangener Identifikationscode), wobei der empfangene Identifikationscode direkt von dem Authentifizierungssystem oder indirekt, z. B. von einem entfernt angeordneten Eingabegerät, empfangen werden kann. Dieser empfangene Identifikationscode wird vom Authentifizierungssystem überprüft, wobei sich bei einem zugelassenen Identifikationscode mindestens eine mit diesem Code assoziierte Interpretationsvorschrift ergibt. Dem Nutzer wird daraufhin zumindest ein Datum zur Interpretation übermittelt und aus dem jeweiligen Datum und der mit dem empfangenen Identifikationscode assoziierten Interpretationsvorschrift ergibt sich eine erwartete Interpretation des Datums durch den Nutzer. Das Authentifizierungssystem empfängt eine tatsächliche Interpretation (empfangene Interpretation) des Datums durch den Nutzer und vergleicht diese mit der erwarteten Interpretation. Bei einer Übereinstimmung von empfangener und erwarteter Interpretation ist der Nutzer authentifiziert und erhält beispielsweise mindestens ein Zugangs-, Zutritts- und/oder Zugriffsrecht, eine Freigabe, eine Zuteilung etc. Bei einem Nicht-Übereinstimmen von erwarteter und empfangener Interpretation kann beispielsweise die Authentifizierung erneut stattfinden oder der Nutzer zumindest teil- oder zeitweise von einer eventuellen weiteren Authentifizierung ausgeschlossen werden.

Das Datum kann entweder aus einer Datenbasis, auf die das Authentifizierungssystem Zugriff hat, entnommen oder bedarfsbezogen generiert werden. Für die Generierung kommt in Betracht, das Datum mittels eines Zufallsgenerators oder in Ansehung der erwarteten Interpretation zu erzeugen, wobei dann die dem Datum zugrunde liegende erwartete Interpretation durch einen Zufallsgenerator erzeugt sein kann. Alternativ kann das mindestens eine Datum mittels des Zufallsgenerators in Ansehung der Interpretationsvorschrift erzeugt werden oder erzeugbar sein oder das mindestens eine Datum wird in Ansehung der erwarteten Interpretation und der Interpretationsvorschrift erzeugt.

Das Übermitteln des Datums an den Nutzer umfasst hier und im Folgenden sowohl ein Übertragen des Datums als auch die Darstellung, Präsentation oder Darbietung des Datums, beispielsweise mittels mindestens eines Darstellungsgerätes wie z. B. eines Monitors, eines Lautsprechers oder dergleichen. Zudem kann der Begriff Datum hier und im Folgenden sowohl ein statisches als auch ein dynamisches Datum bezeichnen und kann, bei gleicher Verwendung von Datum und erzeugtem Datum, synonym mit dem Begriff erzeugtes Datum verwendet werden.

Vorteilhafte Weiterbildungen dieses Verfahrens sind Gegenstand der auf den oben genannten Anspruch rückbezogenen Unteransprüche.

Das zumindest eine Datum ist bevorzugt in einer Datenbasis hinterlegt oder hinterlegbar und steht somit dem Authentifizierungssystem unmittelbar zur Verfügung. Hieraus ergibt sich ein schneller Zugriff des Authentifizierungssystems auf das mindestens eine Datum. Mittels der Hinterlegbarkeit kann eine Anpassung des Inhalts der Datenbasis beispielsweise an benutzer- oder einsatzspezifische Anforderungen oder sich ändernde Sicherheitsanforderungen erfolgen. Ohne eine solche Datenbasis ist bevorzugt vorgesehen, dass das Datum bedarfsbezogen generiert wird, z. B. ein textuelles Datum durch Verwendung eines Zufallsgenerators zur Erzeugung einer Folge zufälliger Zeichen als Basis für das Textdatum.

Weiter bevorzugt ist eine Codierung des Identifikationscodes, der Interpretation, des Datums und/oder einer Mehrzahl von diesen (auch in einer Kombination) in Kombination mit einer Decodierung vorgesehen. Die Codierung und/oder Decodierung wird von Codier- und/oder Decodiermitteln, welche alternativ und/oder in Kombination das Authentifizierungssystem, das Eingabegerät, ein Darstellungsgerät und/oder mindestens ein damit assoziiertes Mittel umfassen, gewährleistet.

Wenn die mindestens eine Interpretationsvorschrift dem jeweiligen Identifikationscode zugeordnet und dem Nutzer bekannt ist, ist vorteilhaft vorgesehen, dass das mindestens eine übermittelte Datum zufällig ausgewählt ist oder die Auswahl des übermittelten Datums nach einer oder mehreren festgelegten oder festlegbaren Regel bzw. Regeln erfolgt. Bei einer daraus resultierenden Variation des übermittelten Datums während mehrerer Durchläufe des Verfahrens ergibt sich jeweils eine andere empfangene Interpretation, wodurch eine hohe Sicherheit des Authentifizierungsverfahrens gewährleistet ist. Alternativ kann das oder jedes übermittelte Datum nach der Übermittlung an den Nutzer als ein benutztes Datum gespeichert werden. Wenn das Authentifizierungssystem das mindestens eine zu übermittelnde Datum vor der Übermittlung an den Nutzer mit gespeicherten, benutzten Daten vergleicht und das mindestens eine zu übermittelnde Datum nur dann dem Nutzer übermittelt wird, wenn dieses keinem der gespeicherten, benutzten Daten entspricht, wird die Sicherheit zusätzlich erhöht, da auf diese Weise eine wiederholte Übermittlung gleicher, also bereits benutzter Daten ausgeschlossen werden kann.

Bevorzugt ist vorgesehen, dass zur Interpretation durch den Nutzer diesem zumindest ein Datum übermittelt wird, welches insbesondere Bilddaten, also z. B. Textdaten, graphische Daten oder sonstige bildlich darstellbare Daten, akustische Daten, haptische Daten und/oder olfaktorische Daten umfasst, auf welche jeweils die Interpretationsvorschrift oder auch mehrere Interpretationsvorschriften angewendet wird bzw. werden und wodurch sich jeweils eine andere Interpretation ergibt. Diese Daten werden dem Nutzer optisch, akustisch, haptisch und/oder olfaktorisch zur Interpretation übermittelt.

Wenn die Interpretationsvorschrift nutzerspezifisch hinterlegbar, editierbar und/oder deletierbar, also entfernbar oder deaktivierbar, ist, kann z. B. die Gültigkeitsdauer zeitlich begrenzt sein, wodurch sich eine Erhöhung der Sicherheit ergibt, oder es kann z. B. eine Anpassung der Interpretationsvorschrift an Nutzerbedürfnisse oder einen jeweiligen Anwendungsfall erfolgen, wodurch sich nicht nur die Sicherheit, sondern auch der Bedienkomfort erhöht.

Weiterhin bevorzugt vorgesehen ist, dass die erwartete und/oder empfangene Interpretation und/oder das Datum mindestens einer vorgegebenen oder vorgebbaren Mindestformatierungsanweisung unterliegt. Diese kann beispielsweise in der Datenbasis hinterlegt oder hinterlegbar sein, womit z. B. eine Adaptierbarkeit an sich ändernde Sicherheitsanforderungen möglich ist. Alternativ kann die Mindestformatierungsanweisung nutzerspezifisch oder bezogen auf das Authentifizierungssystem insgesamt hinterlegt oder hinterlegbar sein. Die Mindestformatierungsanweisung kann beispielsweise bei textuellen Interpretationen (Passwort) die Forderung einer spezifischen Länge des Passwortes, z. B. vier, sechs oder acht Zeichen, von welchen beispielsweise zumindest eines ein Großbuchstabe sein soll und welche z. B. keine Leerzeichen sein dürfen, umfassen. Analog kann die Mindestformatierungsanweisung beispielsweise auch auf Bilddaten oder akustische Daten zutreffen und hier beispielsweise die Anzahl der Daten oder die Kombination verschiedener Arten von Daten betreffen. Die Mindestformatierungsanweisung wird im Zusammenhang mit dem Vergleich von empfangener und erwarteter Interpretation, bei der Auswahl oder der Erzeugung des Datums angewendet und kann beispielsweise einem oder mehreren Nutzern und/oder Nutzergruppen und/oder einem Zweck der Authentifizierung zugewiesen sein. Mittels dieser Mindestformatierungsanweisung wird die Sicherheit des Authentifizierungsverfahrens vorteilhaft nochmals weiter verbessert.

Wenn als Identifikationscode mindestens ein Bilddatum und/oder ein akustisches Datum und/oder ein biometrisches Datum übermittelt werden und das Authentifizierungssystem den empfangenen Identifikationscode mit mindestens einem gespeicherten Identifikationscode vergleicht, ist eine Identifikation des Nutzers dem jeweiligen Zweck der Authentifizierung angepasst möglich. Zusätzlich oder alternativ kann auch die Anpassung an mindestens einen Nutzer oder mindestens eine Nutzergruppe oder eine oder mehrere Umgebungsbedingungen, wie Licht- und/oder Sichtverhältnisse, Geräuschpegel etc. und/oder Kombinationen daraus, vorgesehen sein.

Daraus ergibt sich für den Nutzer eine hohe Sicherheit und eine hohe Zuverlässigkeit sowie ein hoher Bedienkomfort. Beispielsweise wäre eine Übermittlung eines Bilddatums besonders bei ungünstigen Umgebungsbedingungen im Hinblick auf Hintergrundgeräusche oder eine Übermittlung eines akustischen Datums bei ungünstigen Lichtverhältnissen bevorzugt; eine berührungs- und oder kontaktlose Übermittlung kann mittels mindestens einem Bild- und/oder akustischen Datum erfolgen. Das mindestens eine biometrische Datum, z. B. ein Fingerabdruck, würde zudem eine sehr hohe Zuverlässigkeit und Reproduzierbarkeit bei der Identifizierung des Nutzers erlauben.

Die Übermittlung des mindestens einen Datums an den Nutzer zum Zweck der Interpretation kann optisch und/oder akustisch und/oder haptisch und/oder olfaktorisch erfolgen. Hierdurch wird eine Anpassbarkeit wie oben erwähnt, z. B. an den Zweck der Authentifizierung, Nutzer oder Umgebungsbedingungen, gewährleistet sowie der Bedienkomfort für den Nutzer erhöht. Gleichzeitig kann die Sicherheit der Übertragung erhöht werden, indem nur dem Nutzer das mindestens eine Datum zugänglich gemacht wird. Dies kann beispielsweise durch haptische Übermittlung, welche einen direkten Kontakt des Nutzers mit einem Vermittler, beispielsweise einem Kraftrückkopplungsgerät oder einem taktilen Rückkopplungsgerät, erfordert, realisiert sein. Bei optischer Präsentation des Datums kann zudem ein Sichtschutz vorgesehen sein. Zusätzlich oder alternativ kann zur optischen Präsentation des Datums ein Darstellungsgerät, welches nur in einem bestimmten Winkel ablesbar ist, oder eine Kombination mindestens zweier Darstellungsgeräte, welche jeweils nur einen Teil der Daten darstellen und diese nur in Kombination miteinander sichtbar werden, vorgesehen sein. Hierdurch wird ein Zugriff Dritter bereits auf das Datum, also nur einen Teil der während der Authentifizierung ausgetauschten Daten, erschwert, was eine besonders große Sicherheit bei der Authentifizierung sicherstellt.

Bevorzugt vorgesehen ist, dass das Authentifizierungssystem die empfangene Interpretation mit der erwarteten Interpretation zum Zweck der Authentifizierung des Nutzers vergleicht. Die erwartete Interpretation kann dabei entweder in der Datenbasis vorgehalten werden oder jeweils bedarfsbezogen aus dem übermittelten oder einem dem übermittelten entsprechenden Datum und der Interpretationsvorschrift gebildet werden. Letztere Möglichkeit umfasst die Bildung der erwarteten Interpretation im Anschluss oder im Zusammenhang mit dem Empfang der empfangenen Interpretation. Zudem ist auch eine Generierung mindestens eines Datums z. B. anhand einer zufällig erzeugten Interpretation möglich. Aus der erzeugten Interpretation wird unter Anwendung der dem zugelassenen Identifikationscode zugeordneten Interpretationsvorschrift oder ggf. mehrerer Interpretationsvorschriften mindestens ein Datum erzeugt, wobei das auf diesem Wege gewonnene Datum bei Anwendung der mindestens einen Interpretationsvorschrift zu der der erzeugten Interpretation entsprechenden, erwarteten Interpretation führt. Weiterhin ist die Erzeugung und Vorhaltung mehrerer erwarteter Interpretationen mittels Anwenden der mindestens einen Interpretationsvorschrift auf mehrere ausgewählte Interpretationen möglich, so dass dem Nutzer aufeinander folgend verschiedene Daten zur Interpretation übermittelt werden können. Alternativ kann die erwartete Interpretation mittels des Zufallsgenerators in Ansehung der Interpretationsvorschrift erzeugt oder erzeugbar sein.

Erfolgt ein zusätzlicher Vergleich der vorgehaltenen erwarteten Interpretation mit der ermittelten erwarteten Interpretation eventuell unter Einbeziehung des übermittelten Datums, lassen sich Manipulation oder Veränderungen des übermittelten Datums und/oder der Interpretation (erwartete oder empfangene) feststellen, was zusätzliche Sicherheit bietet.

Eine optional durchgeführte Plausibilitätskontrolle des übermittelten Datums gewährleistet, dass die Anwendung der Interpretationsvorschrift oder mehrerer Interpretationsvorschriften auf das mindestens eine Datum eine erwartete Interpretation zur Folge hat und/oder dass diese erwartete Interpretation die einzige mögliche Interpretation ist.

Wenn das zur Verwendung durch den Benutzer vorgesehene Darstellungsgerät entfernt von dem Authentifizierungssystem angeordnet ist, erfolgt ein Datentransfer leitungsgebunden oder leitungslos. Dieser Datentransfer kann zudem ein Komprimieren der Daten umfassen, wodurch sich beispielsweise eine schnelle Übertragung und/oder die Möglichkeit einer parallelen Übertragung mehrerer (auch unterschiedlicher) Daten ergeben.

Wenn ein zur Verwendung durch den Nutzer vorgesehenes Eingabegerät entfernt von dem Authentifizierungssystem angeordnet ist, erfolgt ein Datentransfer leitungsgebunden oder leitungslos. Hierzu kann beispielsweise ein dem Authentifizierungssystem permanent zugeordnetes Eingabegerät verwendet werden, wie z. B. ein mittels eines Kabels oder kabellos mit dem Authentifizierungssystem verbundener so genannter Touch-Screen oder eine Tastatur. Ebenso kann das Eingabegerät dem Authentifizierungssystem temporär zugeordnet sein, z. B. wenn als Eingabegerät ein dem Nutzer zugeordnetes Eingabegerät, z. B. ein Mobilfunkgerät, ein Personal-Computer, ein Laptop oder dergleichen, verwendet wird. Hierdurch ergibt sich ein hoher Bedienkomfort bei gleichzeitiger räumlicher Flexibilität.

Wenn eine Codierung und eine Decodierung des empfangenen Identifikationscodes, des Datums und/oder der empfangenen Interpretation erfolgt oder vorgesehen sind, wird vorteilhaft die Sicherheit zusätzlich erhöht.

Wenn die Interpretationsvorschrift benutzerspezifisch vorgegeben oder vorgebbar ist, wird es beispielsweise dem Nutzer ermöglicht, die ihm zugeordnete Interpretationsvorschrift an persönliche Vorlieben oder Anforderungen anzupassen, was den Bedienkomfort für den Nutzer und folglich die Akzeptanz des Authentifizierungssystems bei dem Nutzer erhöht.

Gleichermaßen betrifft die Erfindung ein Computerprogramm mit durch einen Computer ausführbaren Programmcodeanweisungen zur Implementierung des oben beschriebenen Verfahrens sowie ein Computerprogrammprodukt, insbesondere Speichermedium, mit einem durch einen Computer ausführbaren Computerprogramm, und ein Authentifizierungssystem, also eine Authentifizierungsvorrichtung, mit Mitteln, insbesondere Programmcodemitteln, also z. B. eine Softwareimplementation des oder der genannten Verfahrensschritte oder Verfahrensschrittfolgen, zur Durchführung des Verfahrens.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder den Zeichnungen offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: eine schematische Übersicht einer Authentifizierung eines Nutzers,
- FIG 2: ein Beispiel eines übermittelten graphischen Datums,
- FIG 3: ein Beispiel eines übermittelten Textdatums,
- FIG 4 bis 6: jeweils eine schematische Übersicht einer alternativen Authentifizierung eines Nutzers.

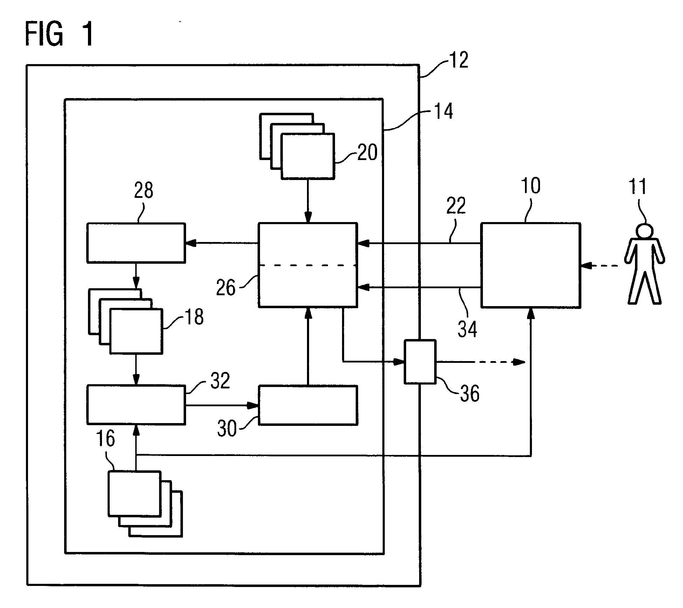

FIG 1 zeigt eine schematisch vereinfachte Darstellung des erfindungsgemäßen Verfahrens zur Authentifizierung eines ein Terminal 10 verwendenden Nutzers 11 an einem Authentifizierungssystem 12 gemäß der Erfindung. Dabei und im Folgenden werden die Begriffe Terminal 10 und Nutzer 11 weitgehend synonym verwendet, da die Authentifizierung sowohl als Authentifizierung des Nutzers 11 als auch des durch den Nutzer 11 bedienten Terminals 10 aufgefasst werden kann. Als gemeinsamer Oberbegriff für Nutzer 11 und Terminal 10 kann der Begriff Client verwendet werden.

Das Authentifizierungssystem 12 besitzt einen Zugriff auf mindestens ein Datum 16 und mindestens eine Interpretationsvorschrift 18, welche in an sich bekannter Weise in zumindest einer Datenbasis hinterlegt sind oder hinterlegbar sein können, und mindestens einen hinterlegten Identifikationscode 20. Das Datum 16 kann auch bedarfsbezogen generiert werden, so dass ein Abruf aus einer Datenbasis mit einer dort gespeicherten endlichen Zahl von Daten entfällt.

Beim Ablauf des Authentifizierungsverfahrens empfängt das Authentifizierungssystem 12 zunächst zumindest einen Identifikationscode 22 (empfangener Identifikationscode), welcher mit dem mindestens einen hinterlegten Identifikationscode 20 mittels eines Komparators 26 verglichen wird. Stimmt der hinterlegte Identifikationscode 20 mit dem empfangenen Identifikationscode 22 überein, ergibt sich ein zugelassener Identifikationscode 28. Jedem zugelassenen Identifikationscode 28 ist zumindest eine Interpretationsvorschrift 18 zugeordnet und mittels einer Anwendung dieser Interpretationsvorschrift 18 auf ein für den jeweiligen Authentisierungsvorgang ausgewähltes Datum 16 wird eine erwartete Interpretation 30 durch einen Generator 32 erzeugt. Das ausgewählte Datum 16 wird dem Nutzer 11 zur Interpretation übermittelt.

Eine vom Authentifizierungssystem 12 empfangene Interpretation 34 des Datums 16 durch den Nutzer 11 wird mittels des Komparators 26 mit der erwarteten Interpretation 30 verglichen. Bei einer Übereinstimmung erfolgt die Authentifizierung 36 des Nutzers 11 und weitere Verfahrensschritte können folgen.

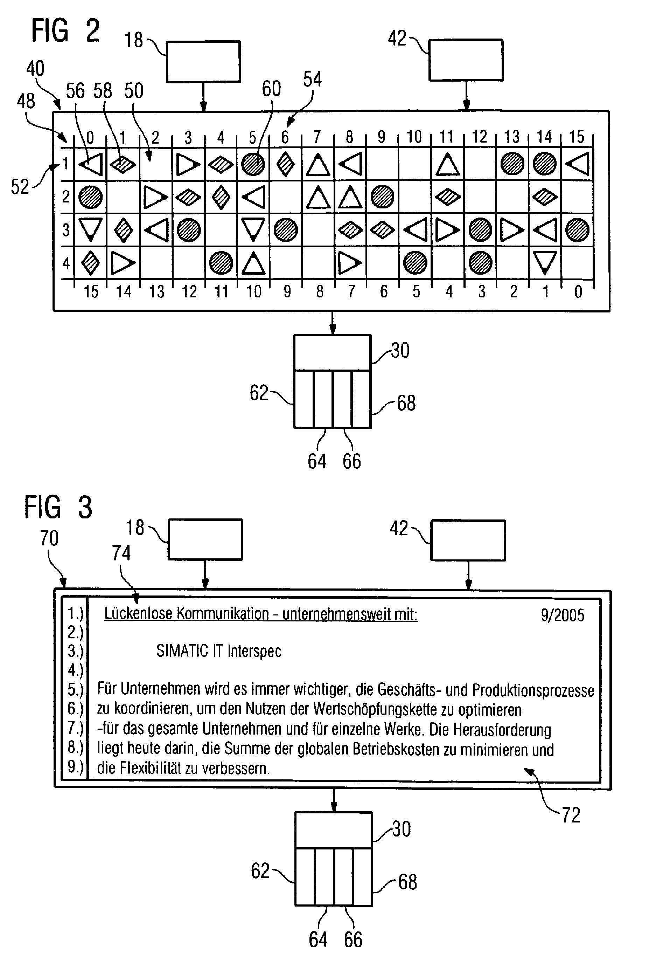

FIG 2 zeigt als Beispiel für ein übermitteltes Datum 16 (FIG 1) ein graphisches Datum 40, aus welchem sich durch eine Anwendung mindestens einer Interpretationsvorschrift 18 und unter einer Zuziehung mindestens einer Mindestformatierungsanweisung 42 eine erwartete Interpretation 30 ergibt. Das graphische Datum 40 beinhaltet eine Tabelle 48 mit Tabellenfeldern 50, welchen jeweils sowohl eine Zeilennummer 52 als auch eine Spaltennummer 54 zugeordnet ist. In diesen Tabellenfeldern 50 erscheint jeweils kein oder ein Symbol 56 aus einer Anzahl unterschiedlicher Symbole 56, 58, 60. Die Mindestformatierungsanweisung 42 kann z. B. fordern, dass die erwartete Interpretation 30 aus einem ersten, zweiten, dritten und vierten numerischen Zeichen 62, 64, 66, 68 in der genannten Reihenfolge zusammengesetzt ist. Die Interpretationsvorschrift 18 umfasst zu einer Ermittlung des ersten numerischen Zeichens 62 der erwarteten Interpretation 30 eine von links nach rechts (entsprechend einer aufsteigenden Nummerierung der Spalten 54) erfolgende Bestimmung des ersten Dreiecks 56 in einer mit "1" bezeichneten Zeile und der Ermittlung der zugeordneten Spaltennummer 54. Zur Ermittlung des zweiten Zeichens 64 wird gleichermaßen die Spaltennummer 54 in einer mit "2" bezeichneten Zeile, zur Ermittlung des dritten Zeichens 66 in einer mit "3" bezeichneten Zeile und zur Ermittlung des vierten Zeichens 68 in einer mit "4" bezeichneten Zeile durchgeführt. Die sich durch Aneinanderreihen der ermittelten Spaltennummern in der vorgegebenen Reihenfolge ergebende erwartete Interpretation 30 ist "0201".

FIG 3 zeigt als Beispiel für ein Datum (16, FIG 1) ein übermitteltes Bilddatum in der speziellen Ausprägung als Textdatum 70, aus welchem sich durch die Anwendung mindestens einer Interpretationsvorschrift 18 und unter Zuziehung mindestens einer Mindestformatierungsanweisung 42 die erwartete Interpretation 30 ergibt. Das Textdatum 70 beinhaltet einen neun Zeilen (mit Zeilennummern "1" bis "9") umfassenden Text 72. Die Mindestformatierungsanweisung 42 fordert z. B., dass die erwartete Interpretation 30 aus einem ersten, zweiten, dritten und vierten numerischen Zeichen 62, 64, 66, 68 in der genannten Reihenfolge zusammengesetzt ist. Die Interpretationsvorschrift 18 umfasst zu einer Ermittlung des ersten numerischen Zeichens der erwarteten Interpretation 62 eine Bestimmung einer Anzahl eines vorgegebenen oder vorgebbaren Buchstabens, z. B. des Buchstabens "e" 74. Zunächst wird eine Vielzahl des vorgegebenen oder vorgebbaren Buchstabens in einer mit "1" bezeichneten Zeile ermittelt. Zur Ermittlung des zweiten Zeichens 64 wird gleichermaßen die Bestimmung in einer mit "2" bezeichneten Zeile, zur Ermittlung des dritten Zeichens 66 in einer mit "3" bezeichneten Zeile und zur Ermittlung des vierten Zeichens 68 in einer mit "4" bezeichneten Zeile durchgeführt. Die sich durch Aneinanderreihen der ermittelten Anzahlen des Buchstabens "e" 74 in der vorgegebenen Reihenfolge ergebende erwartete Interpretation 30 ist entsprechend "6020".

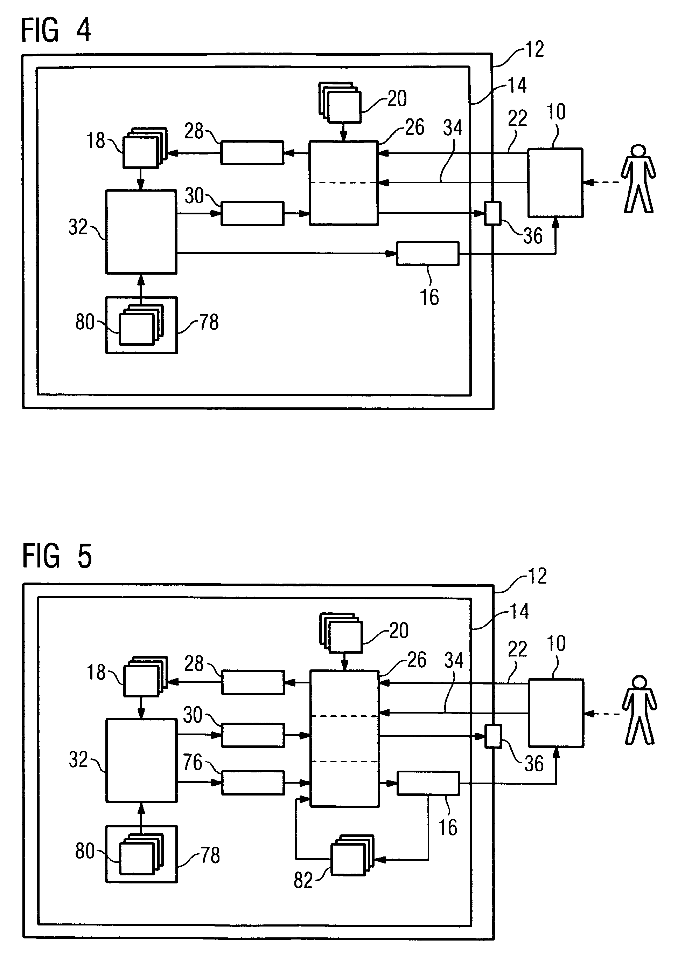

FIG 4 zeigt eine schematische Übersicht einer alternativen Authentifizierung des Nutzers 11 an einem Authentifizierungssystem 12, welche in ihren Grundzügen der in FIG 1 dargestellten Authentifizierung entspricht, wobei die erwartete Interpretation 30 durch Verwendung der Interpretationsvorschrift 18 vom Generator 32 zufällig erzeugt wird. Das Datum 16 wird aus der zufällig erzeugten erwarteten Interpretation 30 vom Generator 32 unter Nutzung mindestens eines sich in einer Objektbibliothek 78 befindenden Elements 80, welches z. B. textuelle oder graphische Daten/Objekte umfasst, passend erzeugt. Der weitere Verlauf erfolgt dann wie in FIG 1 dargestellt. Es kann auch vorgesehen sein, dass nach dem Erzeugen des Datums 16 die zugrunde liegende erwartete Interpretation wieder gelöscht wird. Zeitlich entkoppelt, z. B. zu einem späteren Authentifizierungszeitpunkt, wird dann aus dem zu interpretierenden Datum 16 vom Generator 32 unter Verwendung der Interpretationsvorschrift 18 die für die Verifizierung der empfangenen Interpretation 34 benötigte erwartete Interpretation 30 erneut generiert. Alternativ zu der zufälligen Erzeugung der erwarteten Interpretation 30 erzeugt der Generator 32 durch Verwendung der Interpretationsvorschrift 18 und unter Nutzung mindestens eines sich in der Objektbibliothek 78 befindenden Elements 80 zufallsbasiert das zu interpretierende Datum 16. Der Generator 32 erzeugt basierend auf dem zufällig erzeugten zu interpretierenden Datum 16 unter Verwendung der Interpretationsvorschrift 18 die passende erwartete Interpretation 30. Die weiteren Schritte der Authentifizierung entsprechen den im Zusammenhang mit der Beschreibung von FIG 1 dargestellten Abläufen.

FIG 5 zeigt eine schematische Übersicht einer weiteren alternativen Authentifizierung des Nutzers 11 an einem Authentifizierungssystem 12, welche in ihren Grundzügen der in FIG 4 dargestellten Authentifizierung entspricht. Im Unterschied zu FIG 4 wird jedoch ein Datum 16, welches dem Nutzer bereits einmal zur Interpretation übermittelt wurde - benutztes Datum 82 - abgespeichert, um später zu Vergleichszwecken wieder abgerufen werden zu können. Das Abrufen und Vergleichen mindestens eines benutzten Datums 82 dient der Gewährleistung, dass das vom Generator 32 erzeugte Datum 16 nicht identisch mit mindestens einem bereits benutzten Datum 82 ist. Ergibt sich bei einem solchen Vergleich, dass dem Nutzer 11 ein bereits benutztes Datum 82 übermittelt werden soll, ist eine erneute Generierung oder Auswahl eines weiteren Datums 16 erforderlich, das ebenfalls auf Übereinstimmung mit bereits benutzten Daten 82 überprüft wird und erst an den Nutzer 11 übermittelt wird, wenn die vorgegebenen Kriterien und Randbedingungen erfüllt sind.

Das oder jedes benutzte Datum 82 kann dabei nutzerspezifisch oder bezogen auf das Authentifizierungssystem 12 insgesamt gespeichert sein. Eine nutzerspezifische Speicherung führt dazu, dass demselben Benutzer niemals oder zumindest nicht innerhalb eines vorgegebenen oder vorgebbaren mit der Häufigkeit der Benutzung des Authentifizierungssystems 12 durch diesen Nutzer 11 korrelierten Zeitraums ein schon einmal verwendetes Datum präsentiert wird. Eine Speicherung benutzter Daten 82 in Bezug auf das Authentifizierungssystem 12 führt dazu, dass innerhalb des Authentifizierungssystems 12 niemals oder zumindest nicht innerhalb eines vorgegebenen oder vorgebbaren mit der Häufigkeit der Benutzung des Authentifizierungssystems 12 durch sämtliche Nutzer 11 korrelierten Zeitraums ein schon einmal verwendetes Datum präsentiert wird. In diesem Zusammenhang kann vorgesehen sein, dass benutzte Daten 82 in einer so genannten verketteten Liste oder einem so genannten Stapel abgelegt sind, die bzw. der nach dem First-In-First-Out-Prinzip eine vorgegebene oder vorgebbare Anzahl der zuletzt benutzten Daten 16 nutzerspezifisch oder bezogen auf das Authentifizierungssystem 12 insgesamt speichert.

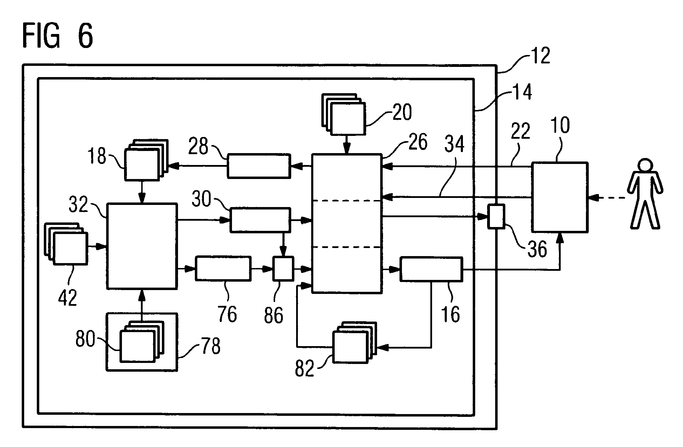

FIG 6 zeigt eine schematische Übersicht einer nochmals alternativen Authentifizierung des Nutzers 11 an einem Authentifizierungssystem 12, welche in ihren Grundzügen der in FIG 5 dargestellten entspricht. Im Unterschied zur FIG 5 nutzt jedoch der Generator 32 bei der Erzeugung eines Datums - erzeugtes Datum 76 - eine z. B. mit einem Identifikationscode assoziierte Mindestformatierungsanforderung 42, damit gewisse Rahmenbedingungen bezogen auf das Datum eingehalten werden können. Als Beispiel für eine solche Rahmenbedingung kommen z. B. eine vorgegebene Länge und/oder weitere spezielle Anforderungen in Betracht. So kann z. B. bei alphanumerischen erwarteten Interpretationen 30 vorgegeben sein, dass mindestens ein groß- und ein kleingeschriebener Buchstabe enthalten ist. Zusätzlich oder alternativ findet eine Plausibilitätskontrolle 86, nachdem der Generator 32 das erzeugte Datum 76 gebildet hat, statt. Diese Plausibilitätskontrolle 86 überprüft, ob sich durch Anwendung der Interpretationsvorschrift 18 genau und ausschließlich die erwartete Interpretation 30 ergibt, also ob das Datum 76 eindeutig mittels der Interpretationsvorschrift 18 interpretierbar ist.

Damit lässt sich die Erfindung kurz wie folgt darstellen: Es wird ein Verfahren zu einer Authentifizierung eines Clients, z. B. eines ein Terminal 10 bedienenden Nutzers 11, mittels eines Authentifizierungssystems 12 mit Zugriff auf zumindest ein Datum 16, 76 und zumindest eine Interpretationsvorschrift 18 angegeben, wobei das Authentifizierungssystem 12 vom Nutzer zumindest einen Identifikationscode - empfangener Identifikationscode 22 - empfängt. Bei einem zugelassenen Identifikationscode 28 ergibt sich mindestens eine damit assoziierte Interpretationsvorschrift 18. Dem Nutzer 11 wird zumindest ein Datum 16, 76 zur Interpretation übermittelt und aus dem jeweiligen Datum 16, 76 ergibt sich anhand der Interpretationsvorschrift 18 eine erwartete Interpretation 30 des Datums 16, 76. Das Authentifizierungssystem 12 empfängt eine tatsächliche Interpretation des Datums 16, 76 durch den Nutzer 11 - empfangene Interpretation 34 - und vergleicht diese mit der erwarteten Interpretation 30; wenn empfangene und erwartete Interpretation 34, 30 übereinstimmen, ist der Nutzer 11 authentifiziert.

## Patentansprüche

1. Verfahren zu einer Authentifizierung eines Nutzers (11),
wobei ein Authentifizierungssystem (12) Zugriff auf zumindest ein Datum (16, 76) und zumindest eine Interpretationsvorschrift (18) hat,
wobei das Authentifizierungssystem (12) vom Nutzer zumindest einen Identifikationscode - empfangener Identifikationscode (22) - empfängt,
wobei sich bei einem zugelassenen Identifikationscode (28) mindestens eine damit assoziierte Interpretationsvorschrift (18) ergibt,
wobei dem Nutzer (11) zumindest ein Datum (16, 76) zur Interpretation übermittelt wird,
wobei sich aus dem jeweiligen Datum (16, 76) anhand der Interpretationsvorschrift (18) eine erwartete Interpretation (30) des Datums (16, 76) ergibt,
wobei das Authentifizierungssystem (12) eine Interpretation des Datums (16, 76) durch den Nutzer (11) empfängt - empfangene Interpretation (34) - und mit der erwarteten Interpretation (30) vergleicht und wobei der Nutzer (11) authentifiziert ist, wenn empfangene und erwartete Interpretation (34, 30) übereinstimmen.

2. Verfahren nach Anspruch 1, wobei das zumindest eine Datum (16, 76) in einer Datenbasis hinterlegt oder hinterlegbar ist.

3. Verfahren nach Anspruch 1 oder 2, wobei das mindestens eine Datum (16, 76) Bilddaten, akustische Daten, Textdaten, haptische Daten und/oder olfaktorische Daten umfasst.

4. Verfahren nach einem der vorangehenden Ansprüche,
wobei die Interpretationsvorschrift (18) nutzerspezifisch hinterlegbar, editierbar und/oder deletierbar ist.

5. Verfahren nach einem der vorangehenden Ansprüche,
wobei die erwartete und/oder empfangene Interpretation (30, 34) und/oder das Datum (16, 76) einer vorgegebenen oder vorgebbaren Mindestformatierungsanweisung (42) unterliegt und
wobei die Mindestformatierungsanweisung (42) im Zusammenhang mit dem Vergleich von empfangener und erwarteter Interpretation (34, 30) bei der Auswahl oder bei einer Erzeugung des Datums (16, 76) angewendet wird.

6. Verfahren nach einem der vorangehenden Ansprüche,
wobei als Identifikationscode (22) mindestens ein Bilddatum und/oder ein akustisches Datum und/oder ein Textdatum und/oder ein biometrisches Datum dienen und wobei das Authentifizierungssystem (12) den empfangenen Identifikationscode (22) mit mindestens einem hinterlegten Identifikationscode (20) vergleicht.

7. Verfahren nach einem der Ansprüche 1 bis 6,
wobei das Authentifizierungssystem (12) die empfangene Interpretation (34) mit der erwarteten Interpretation (30) vergleicht, welche in der Datenbasis (14) vorgehalten und/oder welche aus dem übermittelten oder einem dem übermittelten entsprechenden Datum (16, 76) und der Interpretationsvorschrift (18) gebildet wird.

8. Verfahren nach einem der vorangehenden Ansprüche,
wobei ein zur Verwendung durch den Nutzer (11) vorgesehenes Darstellungsgerät entfernt von dem Authentifizierungssystem (12) angeordnet ist und wobei ein Datentransfer leitungsgebunden oder leitungslos erfolgt.

9. Verfahren nach einem der vorangehenden Ansprüche,
wobei ein zur Verwendung durch den Nutzer (11) vorgesehenes Eingabegerät entfernt von dem Authentifizierungssystem (12) angeordnet ist und wobei ein Datentransfer leitungsgebunden oder leitungslos erfolgt.

10. Verfahren nach einem der vorangehenden Ansprüche,
wobei eine Codierung und eine Decodierung des empfangenen Identifikationscodes (22), des Datums (16, 76) und/oder der empfangenen Interpretation (34) erfolgt.

11. Verfahren nach einem der vorangehenden Ansprüche,
wobei die Interpretationsvorschrift (18) benutzerspezifisch vorgegeben oder vorgebbar ist.

12. Computerprogramm mit durch einen Computer ausführbaren Programmcodeanweisungen zur Implementierung des Verfahrens nach einem der Ansprüche 1 bis 11, wenn das Computerprogramm auf einem Computer ausgeführt wird.

13. Computerprogrammprodukt, insbesondere Speichermedium, mit einem durch einen Computer ausführbaren Computerprogramm gemäß Anspruch 12.

14. Authentifizierungssystem (12) mit Mitteln, insbesondere Programmcodemitteln, also z. B. einer Softwareimplementation des oder jedes oben genannten Verfahrensschrittes oder der oder jeder oben genannten Verfahrensschrittfolge, zur Durchführung des Verfahrens nach einem der Ansprüche 1 bis 11.
